(19) Europäisches Patentamt
European Patent Office
Office européen des brevets

(11) **EP 2 912 817 B1**

(12) **EUROPEAN PATENT SPECIFICATION**

(45) Date of publication and mention
of the grant of the patent:
**04.12.2019   Bulletin 2019/49**

(21) Application number: **13705146.2**

(22) Date of filing: **14.02.2013**

(51) Int Cl.:
***H04L 29/06*** *(2006.01)*

(86) International application number:
**PCT/EP2013/052978**

(87) International publication number:
**WO 2014/063833 (01.05.2014 Gazette 2014/18)**

(54) **A METHOD AND APPARATUS FOR DISTRIBUTING MEDIA CONTENT SERVICES**

VERFAHREN UND VORRICHTUNG ZUR VERTEILUNG VON MEDIENINHALTSDIENSTEN

PROCÉDÉ ET APPAREIL PERMETTANT DE DISTRIBUER DES SERVICES DE CONTENU MULTIMÉDIA

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **23.10.2012   PCT/EP2012/070960**

(43) Date of publication of application:
**02.09.2015   Bulletin 2015/36**

(73) Proprietor: **Telefonaktiebolaget LM Ericsson
(publ)
164 83 Stockholm (SE)**

(72) Inventors:
• **HUBER, Michael
S-17266 Sundbyberg (SE)**

• **LUNDQVIST, Thomas
S-11445 Stockholm (SE)**
• **JONES, Anthony
Southampton Hampshire SO30 4DA (GB)**

(74) Representative: **Ericsson
Patent Development
Torshamnsgatan 21-23
164 80 Stockholm (SE)**

(56) References cited:
**US-A1- 2007 097 272     US-A1- 2007 121 629
US-A1- 2012 144 445**

**Description**

**TECHNICAL FIELD**

This invention relates to a method and apparatus for distributing a media content service.

**BACKGROUND**

Traditional telecommunications systems have evolved rapidly in recent years to encompass considerably more capability than simply delivering a telephony service. Internet technology based on data packets and associated transmission protocols, for example the Internet Protocol (IP), has now superseded the old space switching techniques and dedicated transmission resources during a telephone call or data transmission session.

The convergence of flexible delivery technologies has enabled services to be mixed in the same physical resource so that for example, in telephony networks, subscribers are now able to receive audio-visual content, including relayed broadcast television and radio services, as well as access internet resources, all via their telephone lines. Similarly, the expansion of wireless networks have enabled a user to receive a range of communications services over a wireless delivery channel.

A Digital Subscriber Loop (xDSL) modem/router, which is widespread in homes, acts as a common assembly point for all domestic communications traffic, such as telephony, computer-based web browsing, email, home shopping or streaming of video material. As will be appreciated by a skilled person, the capacity of the digital subscriber loop has to be shared among the services being provided to the subscriber at any particular time.

There is considerable interest in receiving "streamed" services which deliver a stream of video and/or audio material to users. The content can be live content or it can be recorded content which is requested on demand. In an Internet Protocol Television (IPTV) system, video and audio content is delivered to users via Internet Protocol (IP) delivery mechanisms. These types of services require a continuous and uninterrupted flow of data. A premises may have multiple terminals which are capable of receiving media content. The demands placed on the delivery channel can vary according to how many terminals require content at a particular time.

Streamed media content services can be provided by one of two methods: Unicast or Multicast. Unicast provides the subscribing receiver with a direct and unique two-way path through the delivery network all the way back to the media server supplying the required data stream. The main streaming activity is managed on a one-to-one basis between the receiver and the source server. The network between the source server and receiver typically comprises a series of intermediate servers installed at network nodes which are not directly involved in the service but only support the transfer of a packet stream. Typically the protocols used to support the transmissions are simple forms of Internet Protocol (IP) itself augmented by one or more higher layer protocols to provide flow control. These protocols extend across the span of the link between the source server and a given receiver. This method of distribution is wasteful of network capacity because, at busy times and for popular media streams, many copies exist in the network simultaneously and this contributes to network congestion.

A Unicast system can support Adaptive Bit Rate Streaming (ABR). This allows some form of rate adaptation. A given service is encoded at a selection of different bit rates (known as representations), with synchronised boundary points at defined locations (e.g. every 50 frames). For each representation, content between successive boundary points is converted into a discrete file. Clients fetch a segment of one of the representations in turn. If a higher or a lower bit rate is required, the next segment is fetched from one of the other representations. The segments are constructed such that there is no discontinuity in decoded pictures/audio if the client switches between representations at the boundary points. This system requires the unicast two-way path between source and receiver to request files and deliver the requested files.

Multicast makes more efficient use of bandwidth by sharing content streams among several receivers. Intermediate network routers are now more closely involved in the service delivery such that some control and management functions are delegated from the source server. This control is supported by more extensive protocols devised for this type of application such as Protocol Independent Multicast (PIM) and Internet Group Multicast Protocol (IGMP). When a new receiver requests a given media item, the network router system finds an existing stream of that content already in the network and directs a copy of it to that new receiver from an appropriately near network node. A new receiver has to be able to join this existing stream under controlled conditions that do not adversely affect existing receivers. Any receiver in this group also has to be able leave the stream, or pause its consumption, without affecting the others. There is now a clear separation of control and management from the content. This complicates the control function because several receivers will have different instantaneous bit rate and control needs and so the segmentation of the stream as it passes through a given network has to deal with the conflicting demands. These are managed directly between the receiving device itself and the nearest upstream router/server that will mediate control functions including any need to refer back to earlier network servers or even the original source server.

Currently, each TV service has to be set up with a conservative configuration. This can be a capped Variable Bit Rate (VBR) with a safe cap value. This is because it is not possible to change bit rate of a service on the fly without interrupting the TV service.

In summary, while unicast systems can support an adaptive bit rate of a streamed service over time, this comes at a significant cost in terms of resources of the delivery network to support a large number of unicast paths, and may require additional servers located near to clients of the network to maintain acceptable response times. Multicast systems can more efficiently use bandwidth resources of the network, but do not support adaptive bit rate needs of client devices.

The present invention seeks to provide an alternative way of distributing media content services, such as video services.

US 20070121629 A1 describes an accelerated channel change by multicasting a bouquet of multicast burst streams from a server. Each multicast burst stream is delayed sufficiently so that a past independent frame is available for delivery to and display by a client device without waiting for a future independent frame. A multicast burst segment of a multicast burst stream includes a portion in which the bandwidth exceeds the nominal data rate of the underlying resource being streamed. The temporal delay between adjacent multicast burst streams in a multicast bouquet is set responsive to a maximum client delay time for tuning to a new resource stream.

US 20120144445 A1 describes a method and apparatus for distributing live video to multiple client devices. In particular, a router is provided that acts on behalf of all client devices in its network. The router serves multiple groups of client devices with each group being formed by client devices having similar bandwidth requirements. The router then requests and receives video chunks from a network. The router then redistributes the video chunks to the multiple client devices using a multicast transmission. In particular, to minimize the demands on the core network, the router sets up a separate multicast to each group. Live video, of the appropriate quality is then multicast to each group.

SUMMARY

An aspect of the present invention provides a method of distributing a plurality of media content services across a distribution network. The method comprises dividing each of the plurality of media content services into segments. The method further comprises transmitting the segments of each of the plurality of media content services as a sequence of bursts, wherein there is a window period between successive bursts during which media content is not transmitted. Each of the media content services has a respective bit rate and the transmitting comprises transmitting each of the segments at a higher bit rate to create the window periods between successive bursts. Starts of bursts of the plurality of media content services are staggered in time with respect to one another.

Advantageously, the starts of bursts of the plurality of media content services are staggered in time with respect to one another such that window periods of any pair of the plurality of media content services do not overlap.

Advantageously, the bursts of the plurality of media content services are of equal burst duration and the starts of bursts of any pair of the plurality of media content services are staggered in time by a time period which is less than, or equal to, the burst duration.

Advantageously, the method further comprises receiving or generating a plurality of media content service representations for at least one of the media content services, each of the media content representations having a different bit rate. The step of dividing each of the media content services into segments divides each of the media content service representations into segments, wherein the segments of the plurality of media content service representations of a respective media content service are aligned in time. The step of transmitting the segments comprises transmitting the segments of each of the plurality of media content service representations as a sequence of bursts, wherein the bursts of the plurality of media content service representations of a respective media content service are aligned in time.

Advantageously, each of the media content services is transmitted as a multicast.

Advantageously, each of the media content service representations is transmitted as a multicast.

Advantageously, each burst comprises a plurality of Internet Protocol packets.

Advantageously, the media content services are video services. Each media content service can be an IPTV service.

Advantageously, the dividing comprises inserting data which indicates a boundary of a segment and the step of transmitting each of the segments uses the inserted data to determine a boundary of a segment.

Advantageously, the method further comprises transmitting an information element which indicates at least one of: an end of a burst; an advance notice of an end of a burst. The information element can be carried within each of the bursts.

Advantageously, each of the media content service representations is transmitted as a first multicast with a multicast destination IP address, and the method comprises transmitting a second multicast which carries the information element, wherein the second multicast has the same destination IP address as the first multicast.

Advantageously, the method further comprises adapting the media content data into packets for transport over the distribution network, and the step of transmitting each of the segments as a burst operates on the packets.

Advantageously, the method further comprises transmitting information about which media content service representations are available for selection.

The method can be performed by a node of the distribution network such as a head end node, or by any other node or combination of nodes.

Advantageously, at least two of the plurality of media content service representations for the video service have a different video resolution.

Another aspect of the invention provides apparatus for distributing a plurality of media content service across a distribution network. The apparatus comprises an interface for receiving the plurality of media content services. The apparatus further comprises segmenting apparatus arranged to divide each of the plurality of media content services into segments. The apparatus further comprises an output unit arranged to transmit the segments of each of the plurality of media content services as a sequence of bursts, wherein there is a window period between successive bursts during which media content is not transmitted. Each of the received or generated media content services has a respective bit rate and the transmitting comprises transmitting each of the segments at a higher bit rate to create the window periods between successive bursts. Starts of bursts of different media content services are staggered in time with respect to one another.

Advantageously, at least one embodiment provides a way of delivering media content services (e.g. video services) in a manner which makes efficient use of resources of the distribution network.

Advantageously, at least one embodiment allows a client device to dynamically alter the bit rate of the media content service. The client device may need to adapt the bit rate due to varying bandwidth demands required of the delivery channel, such as a change to the number of media content services used at any particular time, or a change to the bandwidth of the delivery channel (e.g. with a wireless delivery channel).

Advantageously, at least one embodiment provides a way of allowing a client device to dynamically alter the bit rate of the media content service without significant disruption to the media content service.

The functionality described here can be implemented in hardware, software executed by a processing apparatus, or by a combination of hardware and software. The processing apparatus can comprise a computer, a processor, a state machine, a logic array or any other suitable processing apparatus. The processing apparatus can be a general-purpose processor which executes software to cause the general-purpose processor to perform the required tasks, or the processing apparatus can be dedicated to perform the required functions. Another aspect of the invention provides machine-readable instructions (software) which, when executed by a processor, perform any of the described methods. The machine-readable instructions may be stored on an electronic memory device, hard disk, optical disk or other machine-readable storage medium. The machine-readable medium can be a non-transitory medium. The machine-readable instructions can be downloaded to the storage medium via a network connection.

## BRIEF DESCRIPTION OF THE DRAWINGS

Embodiments of the invention will be described, by way of example only, with reference to the accompanying drawings in which:

Figure 1 shows a typical system for delivering services to subscriber premises over a delivery channel;
Figure 2 shows a modified system corresponding with Figure 1 in accordance with an embodiment of the invention;
Figure 3 shows processing performed on a media content stream to create a set of segmented representations in accordance with an embodiment of the invention;
Figure 4 shows processing performed on representations of a media content stream of different bit rates to form bursts in accordance with an embodiment of the invention;
Figure 5 shows a method of processing media content which can be performed at one or more nodes of a distribution network;
Figures 6 and 7 show time lines of an operation to change the bit rate of a media content stream received at a subscriber apparatus;
Figure 8 shows apparatus in accordance with an embodiment of the invention;
Figure 9 shows part of the apparatus of Figure 8 in more detail;
Figure 10 shows packets used to carry media content data;
Figure 11 shows a media content distribution network in more detail;
Figure 12 shows transmission of multicasts to a subscriber apparatus;
Figures 13 and 14 show possible timing schemes for the transmission of a plurality of media content services;
Figure 15 shows another possible timing scheme for the transmission of a plurality of media content services in which window periods are offset from one another;
Figures 16 shows the scheme of Figure 15 in more detail, showing the timing relationship of representations of each of the media content services;

Figure 17 shows another possible timing scheme for the transmission of a plurality of media content services in which bursts are of different durations;

Figures 18 and 19 show methods of processing media content which can be performed at one or more nodes of a distribution network;

Figure 20 shows processing apparatus for a computer-based implementation.

## DETAILED DESCRIPTION

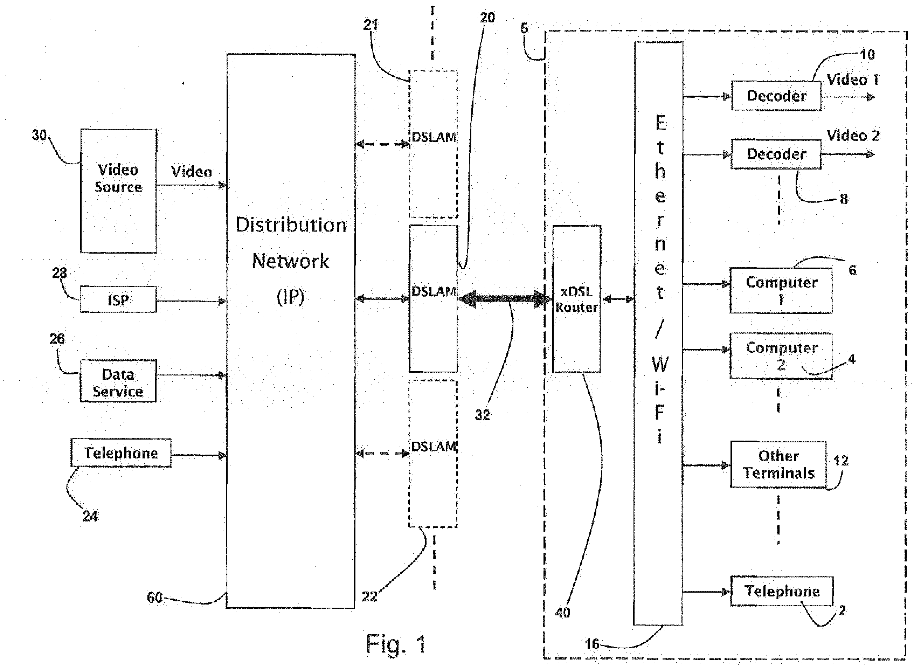

Figure 1 is a schematic diagram of a typical system for providing communication services to subscriber premises 5. The various resources shown contribute to the delivery of a group of services to a subscriber over the digital subscriber loop 32 between a premises 5 and the network.

At the subscriber side shown on the right-hand side of Figure 1, a number of different devices are present that may require services to be provided over a digital subscriber loop. Typically, such devices may include: a telephone 2; computers 4, 6; video decoders 8 and 10; together with other terminals denoted generically by terminal 12. These devices 2-12 are coupled to a digital subscriber loop (xDSL) router 40 over a local subscriber network 16, which is typically provided by an Ethernet or a wireless network.

On the network side shown on the left-hand side of Figure 1, a digital subscriber loop (xDSL) access multiplexer (DSLAM) 20 is coupled via a distribution network 60 to a plurality of service sources 24-30. The distribution network 60 can be an Internet Protocol (IP) based distribution network in which all of the services 24-30 are transported using IP. The term xDSL includes Asymmetric Digital Subscriber Line (ADSL) and variants (ADSL2, ADSL2+), Very high bit-rate Digital Subscriber Line (VDSL) and other variants.

The services 24-30 shown at the left are examples of various types of service, all of which may be combined using Internet Protocol (IP) for delivery across the digital subscriber loop to the consumer, where they are separated again for the individual destination devices in the home, as will be understood by a skilled person. The Internet Protocol (IP) infrastructure at the Service Provider end is configured differently on demand for each subscriber, as will be understood by a skilled person, and additional DSLAMs 21, 22 are shown for completeness.

A video source 30 is shown supplying an input to the distribution network 60. There are various types of video service. A first type of video service is live video that is delivered in real time. A second type of video service uses video data which is stored as video files in servers. These video files may be watched in real time as if they were live video or may be transferred in non-real time for later playback at the subscriber's premises. Typically, this video service type might be used for a film library that enables a film to be downloaded by a subscriber for immediate viewing or stored for later use. The stored video files may be for video service recording content accessed in accordance with the requirements of an individual subscriber, for example in accordance with a digital video recorder (DVR) schedule of a subscriber. In some embodiments this non real-time video service content may be deferred by being temporarily buffered in the network when the digital subscriber loop is being heavily utilised, and being moved to the local storage when capacity across the digital subscriber loop becomes available.

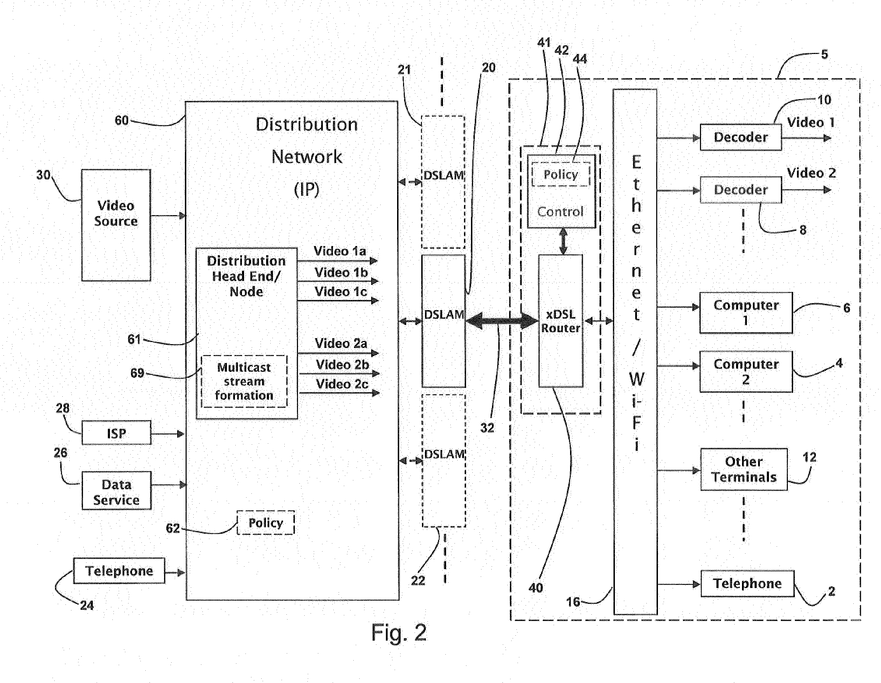

Figure 2 is a schematic diagram corresponding with Figure 1 and showing additional elements in accordance with embodiments of the invention. Elements in Figure 2 having the same or similar function to corresponding elements in Figure 1 have been given the same reference numerals.

In Figure 2, apparatus 41 provided at a subscriber end 5 includes a control function which is able to select a representation of a media content stream, at a particular bit rate, and can join a multicast which provides that representation. The control function is able to dynamically select between representations over a period of time, and can leave a multicast of one representation and can join a multicast of another representation. In some embodiments, apparatus 42 provided at a subscriber end 5 can arbitrate between multiple demands of devices 2-12. Apparatus 42 can conveniently form part of xDSL router 40 or it can be a separate device which is connected to the xDSL router 40. Alternatively, the functionality of apparatus 42 can form part of a device 2-12 connected to the xDSL router 40. Policy, which can be used by the apparatus 42 to arbitrate between demands, can be located 44 at the subscriber apparatus and/or in the network 62. Distribution network 60 includes additional processing functions 69 to form multicast streams which provide a set of representations of a service at different bit rates. As described below, these representations are transmitted as a sequence of bursts with window periods between successive bursts which allow a subscriber apparatus to join and/or leave a multicast of a required representation. The processing functions 69 can be performed by a distribution head end 61 or by any other node or combination of nodes.

In embodiments of the invention, each media content service is made available in a plurality of media content service representations, each having a different bit rate. For example, a video service 1 can be made available in three video service representations 1a, 1b, 1c and video service 2 can be made available in three video service representations 2a, 2b, 2c. In different embodiments, and for different video services, the number of video services representations available for selection may be greater or less than 3, as decided by a skilled person. One or more other properties of the video service can vary among the representations, such as video resolution, frame rate. Audio rates (or number of audio channels) can also vary between representations. For example, consider representations 1a, 1b, 1c have progressively higher bit rates. At least one of the higher bit rate representations (e.g. 1c) can have a higher resolution than one of the lower bit rate representations (e.g. 1a, 1b).

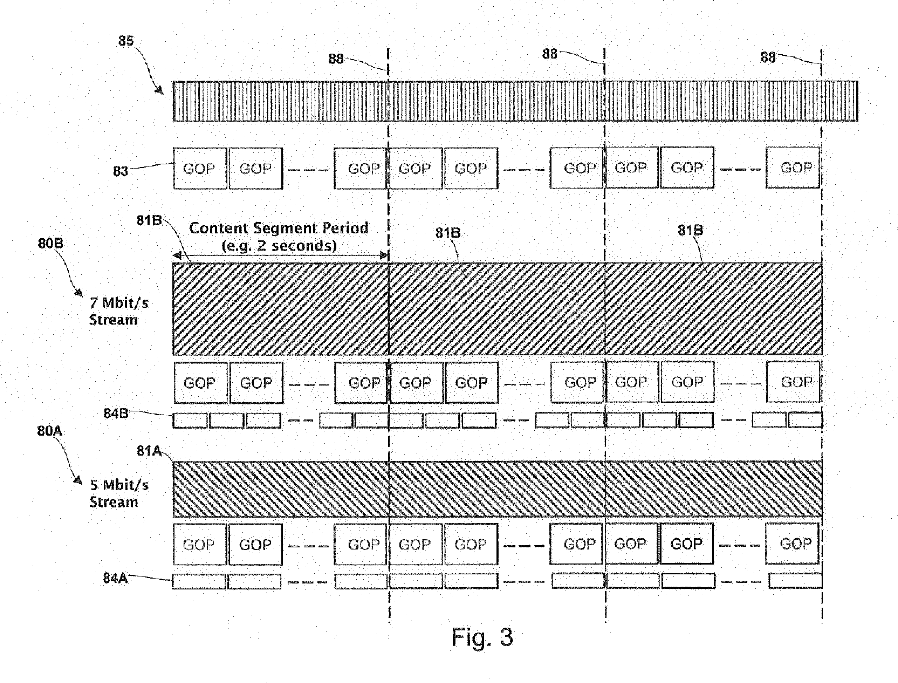

Figure 3 shows processing performed on a media content stream 85 to form a set of representations 80A, 80B at different bit rates. In this example embodiment the media content is video. Each video service 85 is coded as a set of representations 80A, 80B. For simplicity, Figure 3 shows Constant Bit Rate (CBR) rate streams but the coding does not have to be constant bit rate. For example, it could be variable bit rate (VBR) or variable bit rate with a particular peak or mean bit rate value, such as capped Variable Bit Rate (VBR). The values of 5Mbit/s and 7Mbit/s are example values, and it will be appreciated that a representation can be generated at any other desired value and that any number of representations may be generated. Each representation is divided into a sequence of segments 81A, 81B. Segment boundaries 82 are aligned, such that the segment boundaries of one representation 80A are aligned in time with the segment boundaries of another representation 80B. A corresponding segment in each of the representations correspond to the same frames of video content. As will be explained, this allows a receiver to switch between representations at one of the segment boundaries 88 and perform a smooth transition between representations. Advantageously, a segment boundary 88 occurs at the end of a Group of Pictures (GOP) 83.

A feature of compressed video data stream syntax is the Group of Pictures (GOP) which comprises a sequence of complete and contiguous video pictures or frames. The Group of Pictures (GOP) begins with a frame selected to be a master frame, denoted as an" I" or Intra Frame for that sequence. This I Frame is coded without reference to any other frame in the sequence and exploits only spatial redundancy within the I frame. Since I frames may be decoded without reference to picture information in any other frame, I frames can be relied upon as a starting point for a decoder.

The other frames or pictures in a Group of Pictures (GOP) can be coded very efficiently by exploiting temporal redundancy in the image sequence. These frames are coded so that information is transmitted describing differences between the current frame and already coded reference frames temporally adjacent to it. Such frames are of two types: one type is a Predicted or P frame type, which is predicted and coded only from one direction of the image sequence, for example from earlier frames in the image sequence. The other type is a Bidirectional frame or B frame type, which are predicted from both forward and backward directions of the sequence, for example by interpolation from earlier and later frames in the video sequence.

As will be appreciated, the success of compression algorithms in achieving low bit rates is because the P and B Frames use smaller amounts of data to encode the picture than an I Frame and are more numerous in a Group of Pictures (GOP). An I Frame uses more data to encode the picture and so these are relatively sparse in a Group of Pictures (GOP). The I frame is very useful when streams are interrupted or suffer occasional errors because it resets the decoder with an independent Frame.

Thus a Group of Pictures (GOP) can be structured as a sequence of I, P and B Frames in an arbitrary pattern e.g. IBBPBBP..... until the next I Frame is inserted. The length of the Group of Pictures (GOP) will affect coding efficiency because it uses predominantly small coded frame sizes. Such a Group of Pictures (GOP) is known as a Closed Group of Pictures (GOP) because it is self-contained and has defined entry points at the I Frame for decoders such that coded pictures following the I frame do not reference any pictures before the I frame. This is useful for this application because the I Frames allow points in a stream at which a bit rate change can be made without necessarily disrupting the decoder.

Advantageously, the video service representations of a video service have aligned segment boundaries 88 so that their GOP patterns are aligned. Data for the different bit rate representations 80A, 80B is packetised. Figure 3 shows a sequence of Transport Stream (TS) packets 84A, 84B for each representation. The number of packets per segment varies according to the bit rate of the representation. The higher bit rate stream 80B has more packets than the lower bit rate stream 80A.

Advantageously, segment boundaries are marked by introducing Boundary Points (BP) that mark the location of the segment boundaries in the segmented streams 80A, 80B where it is possible to switch cleanly between the representations and deliver the segments using multicast. These BPs can also act as reference points in the stream for any other purpose. The BP can be inserted in a continuous stream, for example as a short gap, or the segmented media data stream can be momentarily paused so that the absence of data allows time for receivers to adjust themselves to any changing circumstances including new receivers joining the stream or existing ones pausing or leaving it.

Conveniently, media data can be encoded according to Motion Pictures Experts Group MPEG-2 format and encapsulated into MPEG Transport Streams, but it will be appreciated that segments 81A, 81B can also be coded and encapsulated in any other suitable format, such as the MPEG-4 File Format.

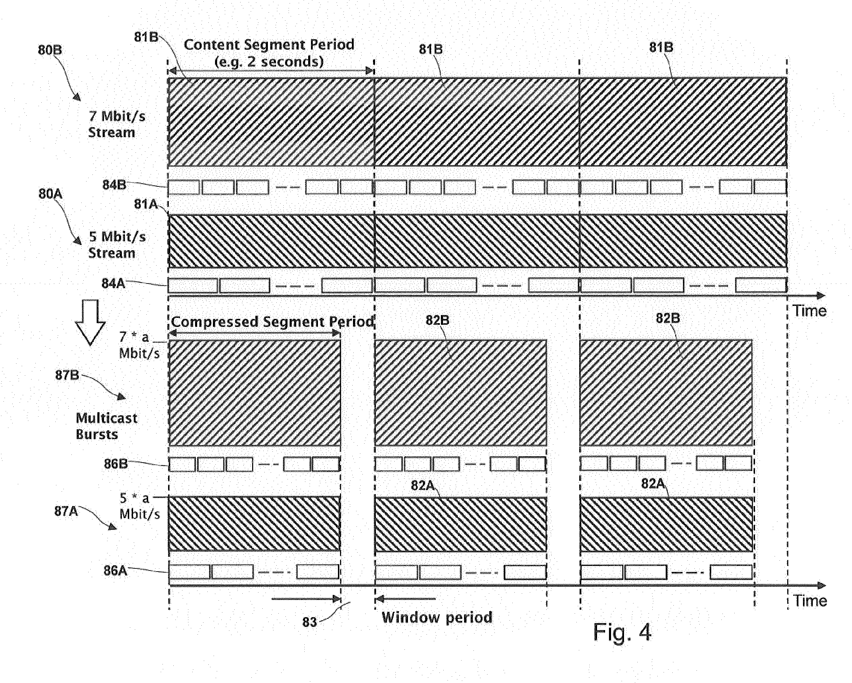

Figure 4 shows processing performed on segmented media content streams 80A, 80B, to form a set of bursts at different bit rates. As will be explained below, the segmented streams 80A, 80B are fed into a multicast playout block that makes each segment play out in less time than the interval between the boundary points. The purpose of this is to deliberately introduce a window period between transmitted bursts 82A, 82B. The duration of the window period 83 is sufficient for a multicast receiver to leave one representation of the stream and join a different representation at a different bit rate. The switching between multicasts can be achieved using multicast Leave and Join messages. The duration of the window period 83 is sufficient for a receiver to send requests to join and leave respective multicasts and for switches and routers in the distribution network 60 to action the requests. The multicasts bursts 82A, 82B have a higher bit rate compared to the respective segmented representations 80A, 80B. The bit rate of the bursts is increased by a factor of a, where:

$$a = \frac{\text{segment duration}}{(\text{segment duration - window duration})} \qquad (1)$$

For clarity, Figure 4 shows the start point of the bursts 82A, 82B aligned in time with the start point of the segments 81A, 81B of representations 80A, 80B, to illustrate the comparison in length of the segments 81A, 81B compared to the bursts 82A, 82B. It will be appreciated that a short buffer period (of at least the length of the window period) is required before the burst can be played out, which would be represented in Figure 4 as an offset along the time axis between the start of segments 81A, 81B and the start of bursts 82A, 82B.

The start of bursts of different content services can be aligned in time (i.e. all bursts of all services start at the same time) or the start times can be staggered with respect to one another. Aligning the start times of bursts of different services in time can have an advantage of allowing a quicker channel change between services.

One consequence of adding window periods 83 to the transmitted streams is that the flow of content becomes jittered beyond the level that normal packet transmission produces. This can be accommodated by buffering provided within the reception apparatus. The window period duration will influence the amount of jitter produced and so there is an optimum size that is related to the worst case response times of the chain of routers/servers delivering the content. This time is taken for switches to recognise and implement all those steps that are required to keep the stream flowing including the potential need for the multicast content to be found at or near the source server. For segment durations of the order of about 2 seconds, a possible value of the window period is around 330 milliseconds. The window size is a function of the responsiveness of the network to support multicast leave and join functions and it will be appreciated that the window period can be modified to a higher or lower value. More generally, the window period could have a value selected from the range of 0.1ms and 10 seconds and, more advantageously, the range 10ms - 350ms. As switches and routers increase in performance, it is possible that the window duration can be reduced to the lower en d of the ranges stated above.

Internet Group Management Protocol (IGMP)v3 provides an explicit LEAVE message, allowing multicast clients to signal they no longer require the multicast to be forwarded to them. This can be implemented in IP switches as "Fast Leave", where the multicast forwarding is stopped immediately when the LEAVE message is received. There is also an IGMP Join message to join a multicast.

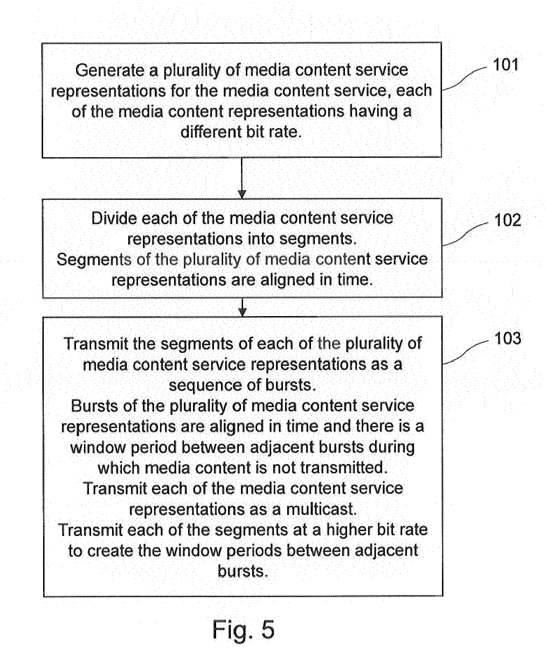

Figure 5 shows a method of processing media content service data which can be performed by a node in the distribution network 60. Step 101 comprises generating a plurality of media content service representations for the media content service, each of the media content representations having a different bit rate. Step 102 comprises dividing each of the media content service representations into segments. Segments of the plurality of media content service representations are aligned in time. The dividing can comprise marking boundary points between segments by inserting signalling data into the data stream for each representation. Step 103 comprises transmitting the segments of each of the plurality of media content service representations as a sequence of bursts. So, the segments of a first representation are transmitted as a first sequence of bursts, the segments of a second representation are transmitted as a second sequence of bursts, and so on. Bursts of the plurality of media content service representations are aligned in time and there is a window period between adjacent bursts during which media content is not transmitted. So, the bursts of the first representation are time-aligned with the bursts (representing the same part of the content) of the second representation, and with the bursts of any other representations, where the time-aligned bursts represent the same part of the content (e.g. the same video frame). Each of the media content service representations is transmitted as a multicast. Each of the generated media content service representations 80A, 80B has a respective bit rate and the transmitting comprises transmitting each of the segments 81A, 81B at a higher bit rate to create the window periods 83 between successive bursts 82A, 82B.

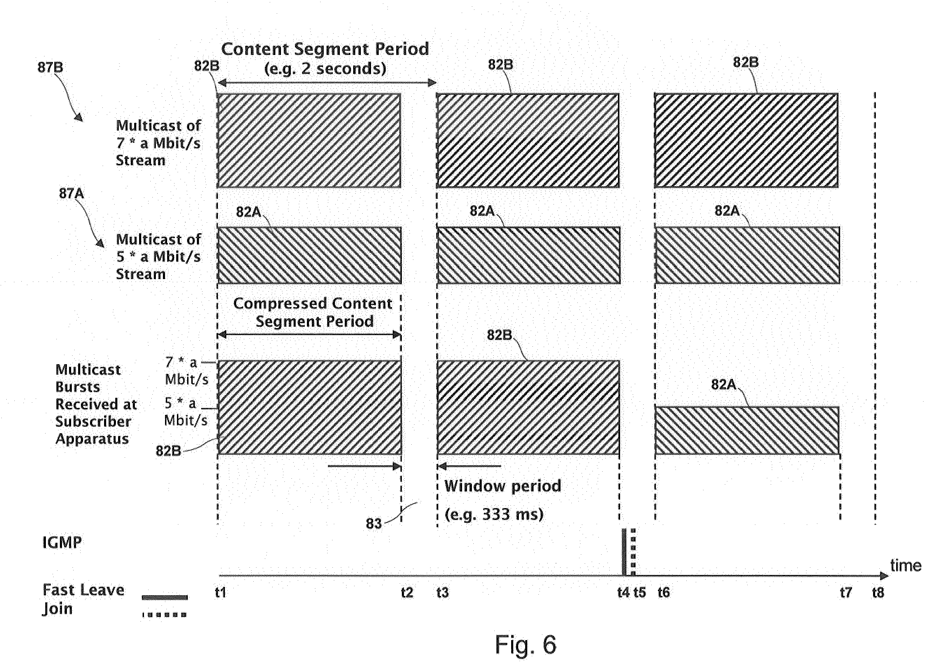

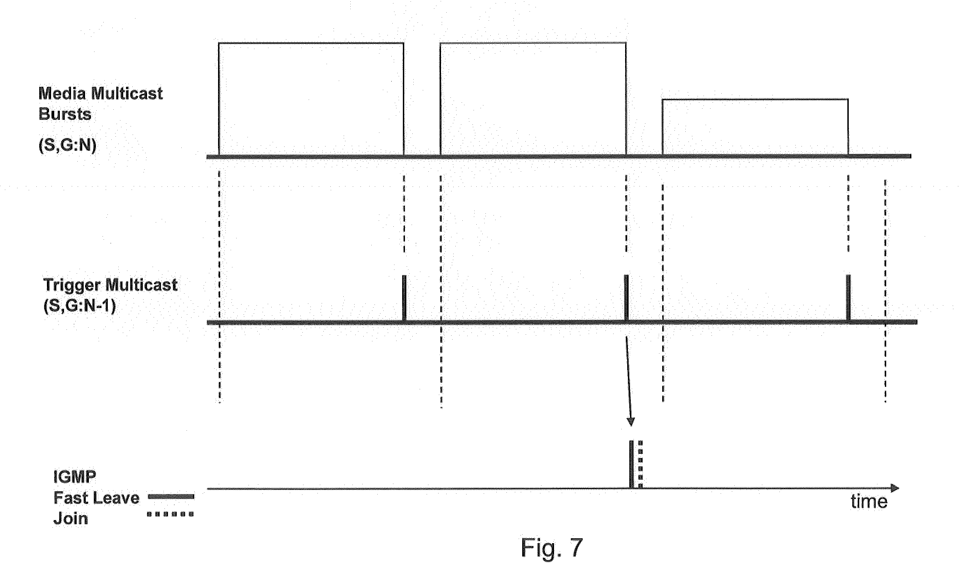

Figures 6 and 7 show time lines of an operation to change the bit rate of a media content stream received at a subscriber apparatus. Figure 6 shows two multicast representations 87A, 87B of different bit rates which are transmitted across distribution network 60. A subscriber apparatus can select one of these representations by joining the multicast. The subscriber apparatus receives bursts 82B of representation 87B (high bit rate) during periods t1-t2 and t3-t4. At time t4 the subscriber apparatus sends signalling to leave the multicast of representation 87B (high bit rate) and to join the multicast of representation 87A (low bit rate). At time t6 the subscriber apparatus receives a burst 82A of representation 87A (low bit rate). The switch between leaving multicast of representation 87B and joining the representation of multicast 87A occurs during the window period t4-t6. Thus, the subscriber apparatus receives a seamless flow of data for the media content service, even though a change in the delivery bit rate has occurred. The order of signalling can be reversed, such that the request to join the new multicast 87A is sent before sending the request to leave the existing multicast 87B. A worst case time for joining a multicast is longer than a worst case time for leaving a multicast, and so it is advantageous to issue the command to join first.

Figure 7 shows further detail of the process to change the bit rate of a media content stream received at a subscriber apparatus. There are various ways in which a subscriber apparatus can detect the end of a burst and the start of the period when the apparatus can safely switch between representations. It is possible to configure a terminal to measure a "time out" period at the beginning of a window period, but this introduces an undesirable latency. It is more advantageous to send signalling which explicitly indicates an end of a burst, or which gives advance notice of when an end of burst will occur. This signals to the subscriber apparatus when it is possible to safely switch between representations, with minimal delay. Advantageously the locations in the data stream where the switching between streams can safely occur are explicitly signalled within, or alongside, the multicasts, thus allowing a receive device to immediately be aware that a switching opportunity exists. Signalling can be provided, for example, in IP packets that share the same multicast destination address as the IP packets carrying the media content service, but different UDP destination port numbers, allowing simple detection and discrimination at the receive device. This has the advantage that whenever the multicast that carries the media content is routed (in response to IGMP joins) the signalling would also automatically follow. Alternatively, the signalling could be delivered in a separate multicast having a separate multicast destination address, with the subscriber apparatus joining/leaving both the multicast carrying the media content and the multicast carrying the end of burst signalling. Another possibility is to include a trailer indicating an end of burst in the media multicast. Examples include: adding trailer data at the end of the last UDP datagram, sending an empty datagram, or changing a parameter such as the sync byte (normally hexadecimal 47) to a different value. Other possibilities are to send an information element which gives advance notice of an end of a segment, such as a number of TS packets remaining in the current segment, an RTP sequence number of the last IP packet in the current segment, or some other suitable advance notice.

The scheme described above can be used when representations at different bit rates to minimise disruption to the delivery and presentation of media content. When a terminal first joins a service the joining could occur during the window or it may occur at any time.

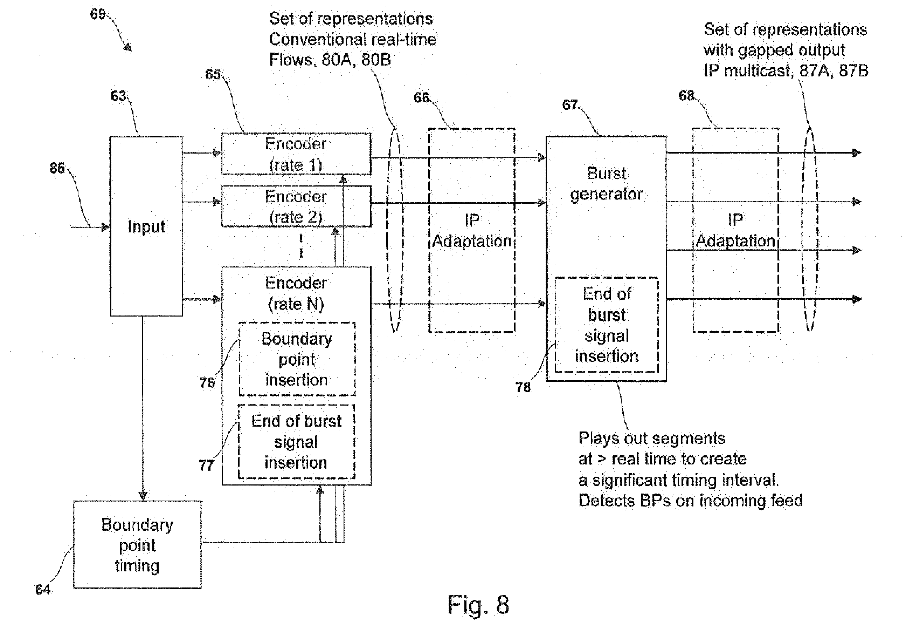

Figure 8 shows apparatus for creating a set of segmented representations and forming bursts in accordance with an embodiment of the invention. The apparatus 69 shown in Figure 8 can be provided at a distribution head end node 61. The apparatus receives an input feed 85 of content (e.g. video) per service. A set of encoders/transcoders 65 generate, in parallel, a set of representations of the content at a set of different bit rates. The representations can differ in another quantity, such as video resolution. A timing generator 64 outputs a signal that determines the boundary point of the segments. For example, this can output a signal once per 50 frames (2 seconds), or at any other suitable time interval. The signal output by generator 64 is applied to all of the parallel encoders 65 for that service. Advantageously, the set of coders 65 can close the GOP (see Figure 3) and a unit 76 can insert in-band signalling such as a Random Access Point (RAP) and a Boundary Point (BP). The outputs of the set of coders 65 are the set of representations 80A, 80B which have time-aligned segments. The representations 80A, 80B are applied to a burst generator unit 67 which creates the bursts (82A, 82B, Figure 4) separated by window periods (83, Figure 4). Unit 67 plays out data at a higher bit rate than the bit rate at which data was received to create the bursts. Unit 67 recognises the start and end of segments 81A, 81B in the representations 80A, 80B by detecting signalling (e.g. the in-band BP signalling inserted by the encoders 65).

GOPs do not necessarily have to be closed at the boundary point. By default they are closed. However closed GOPs are slightly more inefficient than open GOPs, so it is possible that open GOPs could also be used. The use of open GOPs has a disadvantage that, when changing representations, there may be some visible impairment to the pictures for the first GOP of the new representation. If representation switches occur infrequently, then open GOPs may be acceptable.

Advantageously, multicast address information is added at the IP adaptation stage, which can occur at the head end 61, or at a node downstream of the head end. Multicast IP datagrams have a destination IP address is set to be in a range reserved for multicast.

The apparatus shown in Figure 8 can operate on data at one of various possible levels. In one advantageous scheme, data is encoded into Transport Stream (TS) packets at a normal rate and the burst generator unit 67 operates on TS packets. Transport Stream packets can be adapted into IP packets 66 before burst generator unit 67, or after unit 67. An alternative is to form bursts before any packetisation (at TS or IP level), but this is less desirable.

Figure 8 shows several possible places where end of burst signalling can be added. Each encoder 65 can include an end of burst signal insertion unit 77 which adds an information element indicating the end of a burst into the encoded data, which includes a header of the TS packets. Alternatively, the burst generator unit 67 can include an end of burst signal insertion unit 78 which is arranged to insert an information element indicating the end of a burst into each of the bursts. Where end of burst signalling is provided as a multicast (with same or different address), the multicast can be generated at apparatus 61.

Typically, a network operator will receive a media content service feed from a service provider and will then convert the feed to the right characteristics for the distribution network and end users of the network. Figure 8 shows a set of encoders/transcoders 65 which operate upon an input data stream 85 to form the multiple representations at different bit rates. However, for situations where a set of representations at different bit rates already exist, it is possible for the input 85 to be a set of representations at different bit rates. The multiple representations can be generated at a point of origin into the distribution network 60 or could be supplied by a service provider.

The multiple representations of a video service can include Standard Definition (SD) and High Definition (HD) representations of the same content. The distribution network may receive an SD feed and an HD feed of the content as inputs 85 or just one (SD or HD) feed with transcoding 65 to generate the other of the SD and HD representations. So, input 85 may be a high quality HD feed and encoders 65 transcode the HD feed to generate lower bit rate, lower resolution, versions of the content.

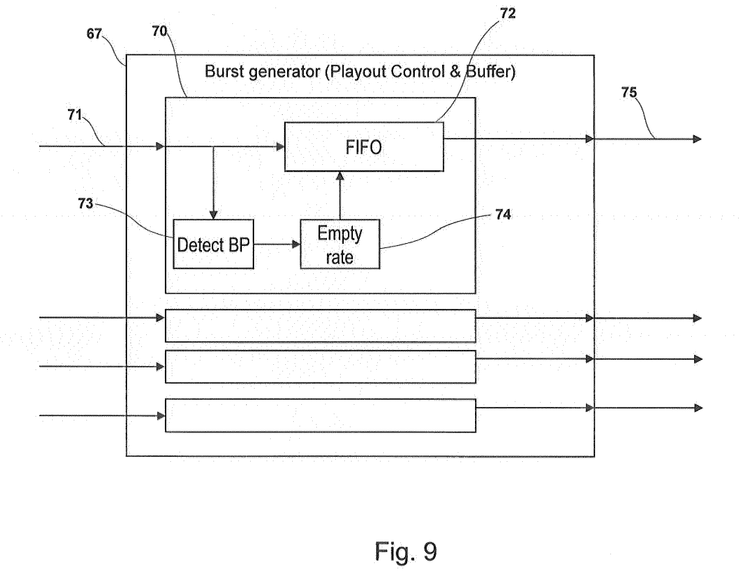

Figure 9 shows further detail of the playout unit 67 of the apparatus of Figure 8. The burst generator unit 67 comprises a parallel set of units 70. Each unit 70 has an input 71 for receiving a segmented stream 80A, 80B of one of the representations. Data is applied to a buffer 72. The buffer operates according to a First In First Out (FIFO) principle. Data is also applied to a detector 73 which detects signalling (e.g. BP signalling) within the data stream indicating the start and end of a segment. Detector 73 applies an output to a unit 74 which controls playout of data from the buffer 72. A segment of data is played out in one continuous block, which can be in the form of a sequence of TS or IP packets carrying TS packets. Unit 74 controls the playout rate, which is greater than the rate at which data was originally received. Data is output 75 in burst form, as explained above.

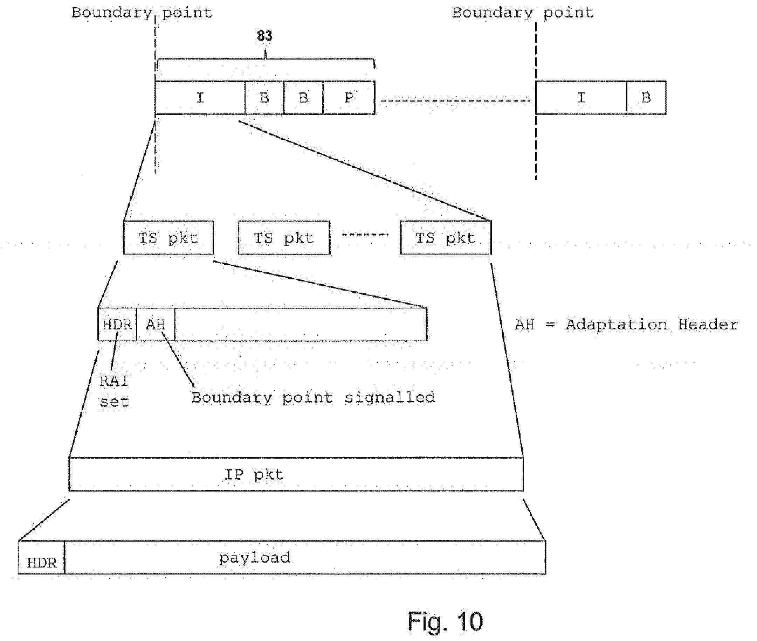

Figure 10 shows an example format of packets used to carry media content data. Video data comprises data representing GOPs. A GOP comprises one or more of I frames, B frames and P frames. GOPs are carried in Transport Stream (TS) packets. Other possible formats include MPEG Dynamic Adaptive Streaming over HTTP (MPEG-DASH). A TS packet has a length of 188 bytes, of which 4 (or more) bytes are header bytes. A header of a TS packet can include signalling which indicates a Boundary Point. The BP can be signalled within the adaptation header (AH) of a TS packet. For an IP-based distribution network, TS packets are carried within the payloads of IP packets. Typically, 7 TS packets are aggregated into one IP packet. Typically, a segment will comprise multiple IP packets. IP packets may be spaced by a short inter-packet gap, which is considerably shorter than the window period. Segments may start with one or more TS packets before the first TS packet carrying (video) content data. One example of this is where encryption is used. The TS packet immediately before the first packet carrying video content contains data needed for provisioning the correct decryption key.

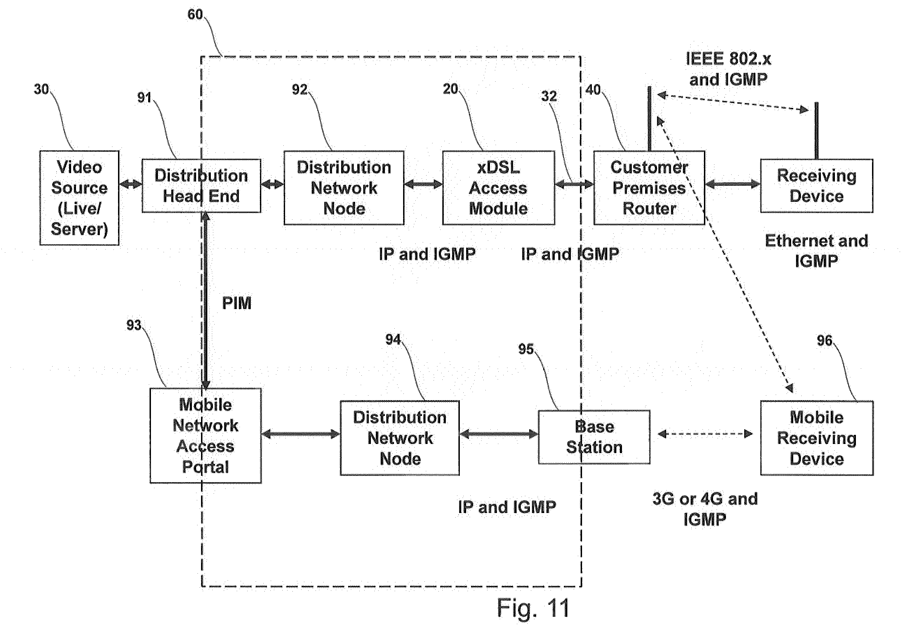

Figure 11 shows distribution networks 60 that may be used to multicast media content data, and protocols used to carry the data and control data flows. The upper part of Figure 11 represents a distribution network for IPTV services using xDSL to subscriber premises. A distribution head end 91 receives inputs 30 from content (e.g. video) sources, which can be live or recorded sources. The distribution network between the head end 91 and a DSL access module comprises distribution nodes 92, which include IP routers. The subscriber loop 32 to a subscriber premises is terminated, at the subscriber side, by a customer premises router, which can also be called a Residential Gateway (RG). Data is carried over the distribution network using IP. The Internet Group Management Protocol (IGMP) is a communications protocol used on the IP distribution network to establish multicast group memberships. Protocols such as IGMP are used to support the communication between upstream routers/servers and support the Leave and Join actions described above. Protocol-Independent Multicast (PIM) is another protocol used within the distribution network. Within the customer premises, content can be distributed by wired network protocols (e.g. Ethernet) or wireless network protocols (e.g. IEEE 802.x). PIM is used between routers, whereas IGMP is layer 2 and is used by switches. The protocols register a destination's interest in receiving a multicast, either for itself, or to be forwarded to one or more next destinations. When there is a leave, the traffic stops if there is nothing else at that destination that is joined. The fast leave operation terminates that flow immediately, whereas without fast leave, a switch will respond to a leave command sending out a request to see if any destination is still interested, keeping the traffic flowing until a timeout occurs. The fast leave operation is used in embodiments of the invention to switch between multicast representations.

The lower part of Figure 11 represents a wireless distribution network, and comprises a Mobile Network Access Portal 93, Distribution Network Nodes 94 and wireless Base Stations 95. There is a wireless delivery channel between a base station 95 and a receiving device 96, which can use a 3G or 4G wireless protocol. As before, the IGMP can be used to establish multicast group memberships, and Protocol-Independent Multicast (PIM) can be used within the distribution network. The mobile receiving device 96 can share content with other devices using a wired or wireless connection. In the wireless system, base station 95 can perform the join multicast/leave multicast functionality (equivalent to that performed at the customer premises router 40) to share the limited resource of the overall wireless network capacity of the cell between multiple mobile receiving devices 96. Alternatively, a mobile receiving device 96 can perform the join multicast/leave multicast functionality, to share the limited resource of the wireless connection between device 96 and the base station 95 between multiple services required by the device 96.

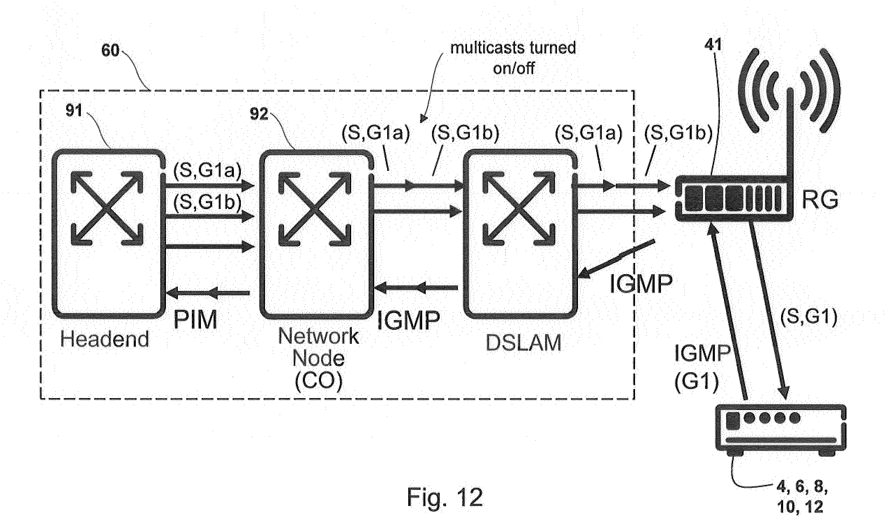

Figure 12 shows transmission of multicasts to a subscriber apparatus 41. Nodes within the distribution network can comprise a headend, a network node (such as a Central Office, and a multi-cast capable DSLAM. The (S,G) notation denotes S=Source Address, G=Multicast Destination Address. G1a, G1b are multicasts carrying different representations of one particular media content service. The multicasts are shown being sent in parallel from the headend 91 to node 92, because the multicasts are received by subscriber apparatus 41 at multiple premises within the network, but the multicasts are sent one at a time from the node 92 to the subscriber apparatus (RG) 41 based on the RG first requesting one of the representations (S, G1a) and then changing to the other of the representations (S, G1b) for a bit rate adjustment on that service. The RG 41 can concatenate the incoming multicasts, which may switch between representations, and form a single continuous multicast output to a conventional receiver 4, 6, 8, 10, 12. As explained above, the functionality of switching between multicast streams may be performed by a device 4, 6, 8, 10, 12 connected downstream of the RG, and that device would perform the concatenation.

**Changing between media content services**

It has been described how HTTP adaptive streaming technology can be combined with IP multicast. The basic principles are:

- the individual representations (e.g. different bitrates) of a media content stream (e.g. linear TV channel) are sent on separate multicast streams;
- the distribution of segments are separated by a gap in time during which no data is sent;
- each segment is distributed as an overspeed burst - i.e. faster than real-time. The burst factor is calculated based on the gap in time that separates the segments;
- a client can change representation during designated gaps, called window periods.

An effect of distributing media content services in this manner is that more network bandwidth is consumed compared to sending segments at their original (real time) speed. The total bandwidth consumed by all of the media content streams may, in a worst case, be equivalent to the combined extra bandwidth needed for sending segments in overspeed mode.

Another effect of distributing media content services in this manner is that clients must change between representations during a window period. This means that all network signalling associated with changing representations may, in a worst case, occur during specific points in time followed by periods with no or little network signalling.

The two effects described above can be reduced, or avoided, by the relative timing of the starts of bursts of the media content services. Advantageously, by evenly distributing the gaps across media content services it is ensured that the total bandwidth consumed by the media content services is efficiently utilised. Even distribution of gaps also ensures that the combined signalling in the network associated with changing bitrate is evenly distributed in time.

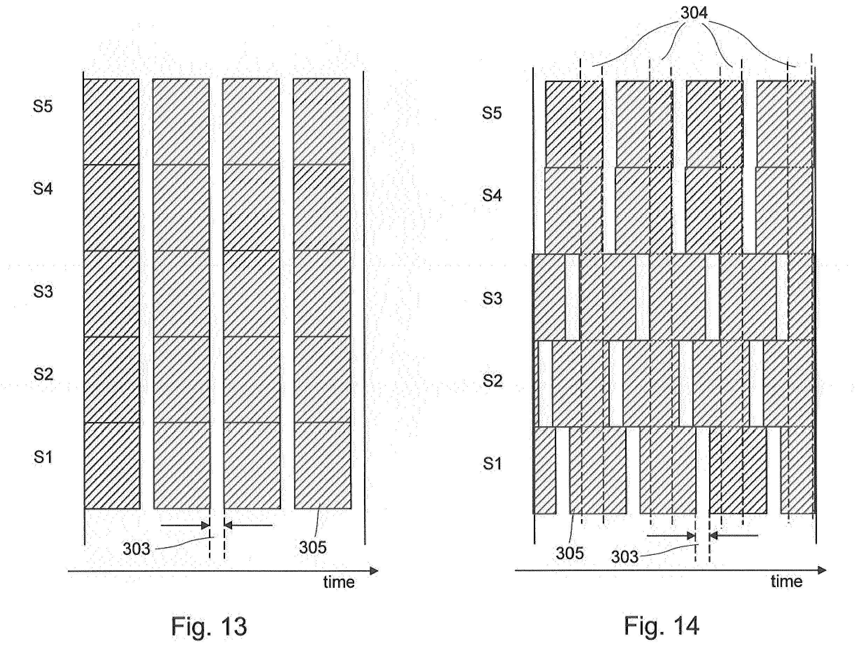

Figure 13 shows five different media content services S1-S5 with synchronised distribution of window periods 303, i.e. bursts 305 of each of the media content services S1-S5 start at the same time, and window periods 303 between bursts 305 are synchronised. The shaded areas indicate periods when all of the media content services occupy bandwidth in overspeed mode. With synchronised window periods 303 the media content services occupy maximum bandwidth during the period when the bursts are transmitted. This is the most inefficient scenario in terms of bandwidth utilisation.

Figure 14 shows five different media content services S1-S5 that are sent with unevenly and randomly distributed window periods 303. The periods 304 bounded by dashed lines indicate periods in time when all of the media content services S1-S5 consume network bandwidth in over-speed mode. It can also be seen that window periods 303 of several of the media content services overlap in time, such as services S2, S4 and S5. Accordingly, signalling to switch between representations (and therefore multicasts of those services) will occur during the same time period for services S2, S4 and S5.

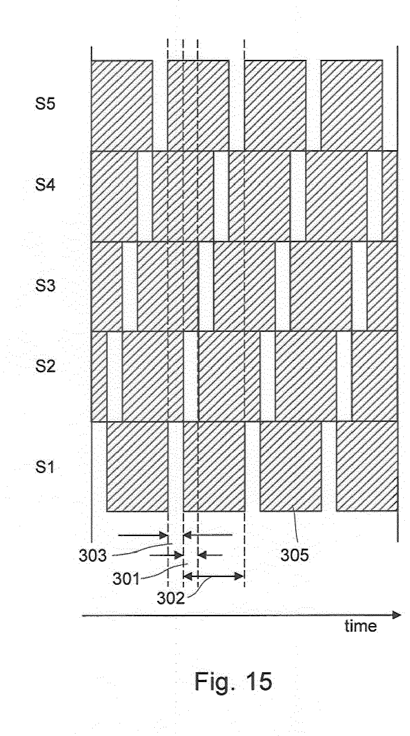

Figure 15 shows five media content services S1-S5 with the starts of bursts 305 staggered in time with respect to one another. Figure 15 shows an advantageous embodiment where, for any pair of the plurality of media content services S1-S5, window periods 303 of the services do not overlap in time. Starts of bursts 305 of media content service S2 are offset by a period 301 from starts of bursts of media content service S1 by a period 301. By setting period 301 to be greater than, or equal to, the window period 303, this results in no overlap between the window periods 303 of media content services S1 and S2. This relationship applies to all of the media content services S1-S5, such that, for any pair of the plurality of media content services S1-S5, the window periods 303 of the services do not overlap. This is the most efficient scenario in terms of bandwidth utilisation.

Figure 15 shows an advantageous embodiment where the plurality of media content services S1-S5 are of equal burst duration 302 and the starts of bursts 305 of any pair of the plurality of media content services S1-S5 are staggered in time by a time period which is less than, or equal to, the burst duration 302. For illustrative purposes the media content services S1-S5 in this example all have the same window period 303, but there can be different values of window period 303 for services S1-S5. Although bursts of media content services S1-S5 are shown of equal duration, there can be different values of burst duration for services S1-S5.

Even though individual media content services may have different characteristics in practice the principles and advantages of the embodiments still apply in that starts of bursts and window periods are distributed as evenly as possible to ensure optimal network bandwidth utilisation.

The process of a client device changing between receiving a first media content service and receiving a second media content service will be called a channel change. In Figure 15, the starts of bursts of any pair of the plurality of media content services S1-S5 are staggered in time by a period of time which is less than the burst duration 302. A client device can send signalling to switch between different media services at any time.

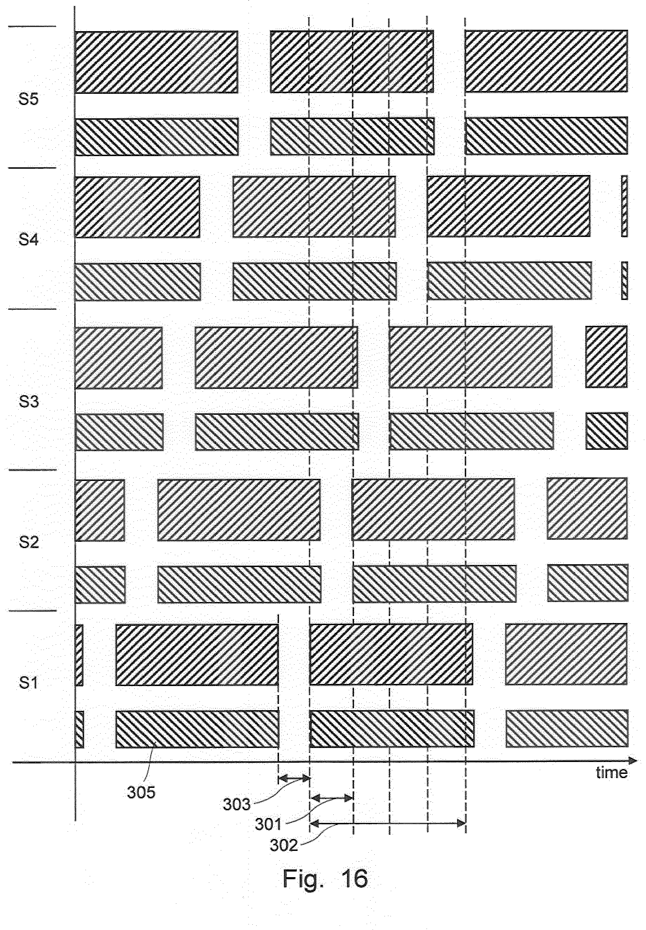

Figure 16 shows a similar plurality of media content services S1-S5 as Figure 15. Figure 16 shows each of the plurality of media content services in more detail. Each of the plurality of media content services S1-S5 comprises multiple representations. The representations of a media content service differ in bit rate from one another. Figure 16 shows two representations per service S1-S5, but the number of representations per service can be any value ≥1. The number of representations per service can differ between services, e.g. service S1 can have two representations, service S2 can have four representations, and so on. The bursts 305 of the plurality of media content service representations of a respective media content service are aligned in time. So, the representations of service S1 are aligned in time, with starts of bursts aligned in time. Similarly, the representations of service S2 are aligned in time, and so on. This allows client devices to switch between representations of a service in a seamless manner, as previously described. However, the bursts of different services S1-S5 are offset in time from one another. This reduces the overall bandwidth required of network resources, and reduces the number of simultaneous multicast joining/leaving operations at any point in time. Figure 16 shows a window period 303 between bursts 305. Starts of bursts 305 of services S1 and S2 are offset by a period of time 301. Advantageously, period 301 is greater than, or equal to, the window period 303. Any of the features described above in respect of media content representations can apply.

The transmission relationship shown in Figures 15 and 16 can be determined by a distribution node (e.g. an encoder or transcoder) or by a content source. The distribution node can be implemented as shown in Figures 8 and 9. The distribution node may receive a single feed of a media content service and generate the plurality of representations per media content service. Alternatively, the distribution node may receive a plurality of representations per media content service which have been generated by another node, such as a source encoder.

The relationship between media content services (and representations) described above, and shown in Figure 16, has an advantage that the bandwidth and network resources needed to handle signalling are reduced because, at any point in time, signalling to switch between representations of a media content service is occurring for a reduced number of the media content services. In Figure 16, at any point in time, signalling to switch between representations of a media content service is occurring for only one of the media content services. This allows the routers and switches of the distribution network to be dimensioned to handle a reduced amount of signalling compared to a transmission relationship with synchronised window periods.

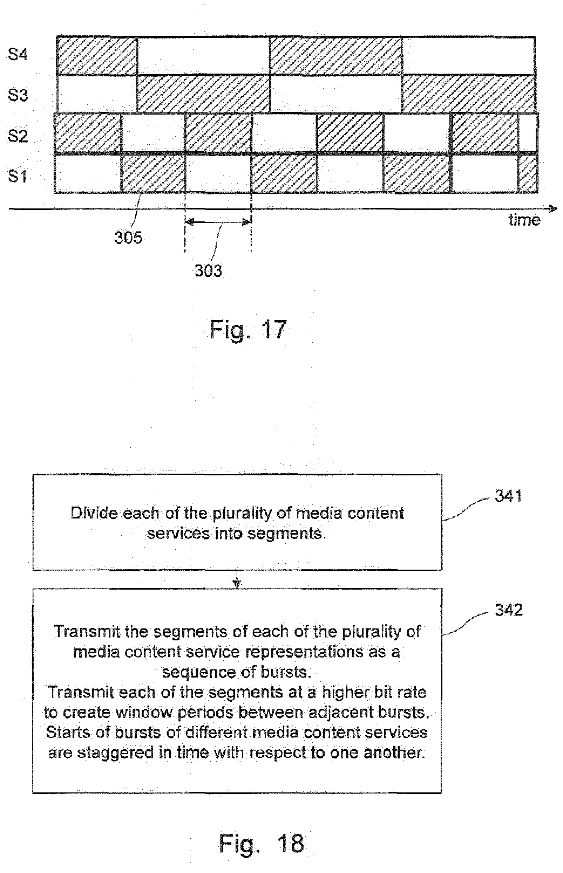

Figure 17 shows another possible timing scheme for the transmission of a plurality of media content services. The bursts 305 of services S1 and S2 are of different duration to the bursts 305 of services S3 and S4. Advantageously the services S1-S4 are transmitted such that starts of bursts 305 are offset for the plurality of services S1-S4. At any point in time, only two of the media content services S1-S4 simultaneously have a window period, thereby reducing the periods of time during which clients devices will be signalling to join and leave multicasts. In Figure 17, bursts 305 and window periods 303 are of equal duration. Alternatively, the bursts 305 can be of longer duration than window periods, as shown in Figures 15 and 16.

Figure 18 shows a method of processing media content service data which can be performed by a node in the distribution network 60. Step 341 comprises dividing each of the plurality of media content services into segments. Step 342 comprises transmitting the segments of each of the plurality of media content services as a sequence of bursts. There is a window period between successive bursts during which media content is not transmitted. Each of the media content services has a respective bit rate and the transmitting comprises transmitting each of the segments at a higher bit rate to create the window periods between successive bursts. Starts of bursts of the plurality of media content services are staggered in time with respect to one another.

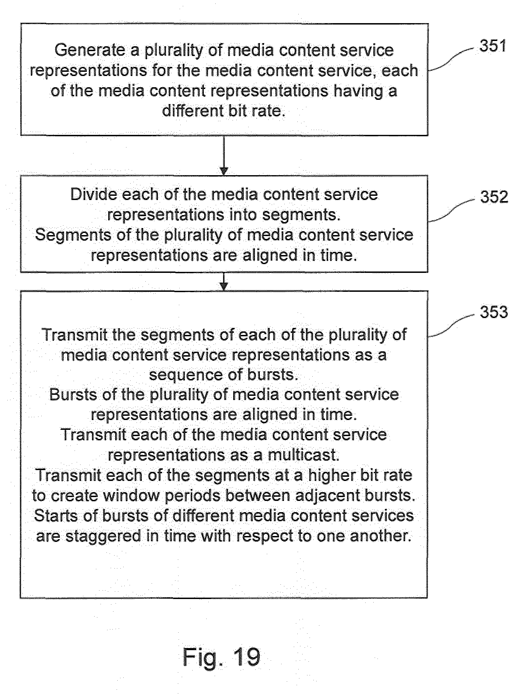

Figure 19 shows a method of processing media content service data which can be performed by a node in the distribution network 60. The method is similar to Figure 17, but each of the media content services comprises a set of representations, such as those shown in Figure 16. Step 351 comprises receiving or generating a plurality of media content service representations for at least one of the media content services, each of the media content representations having a different bit rate. Step 352 comprises dividing each of the media content service representations into segments. The segments of the plurality of media content service representations of a respective media content service are aligned in time. Step 353 comprises transmitting the segments of each of the plurality of media content service representations as a sequence of bursts. Bursts of the plurality of media content service representations of a respective media content service are aligned in time. There is a window period between successive bursts during which media content is not transmitted. Each of the media content services has a respective bit rate and the transmitting comprises transmitting each of the segments at a higher bit rate to create the window periods between successive bursts. Starts of bursts of the plurality of media content services are staggered in time with respect to one another. Advantageously, each of the media content service representations is transmitted as a multicast.

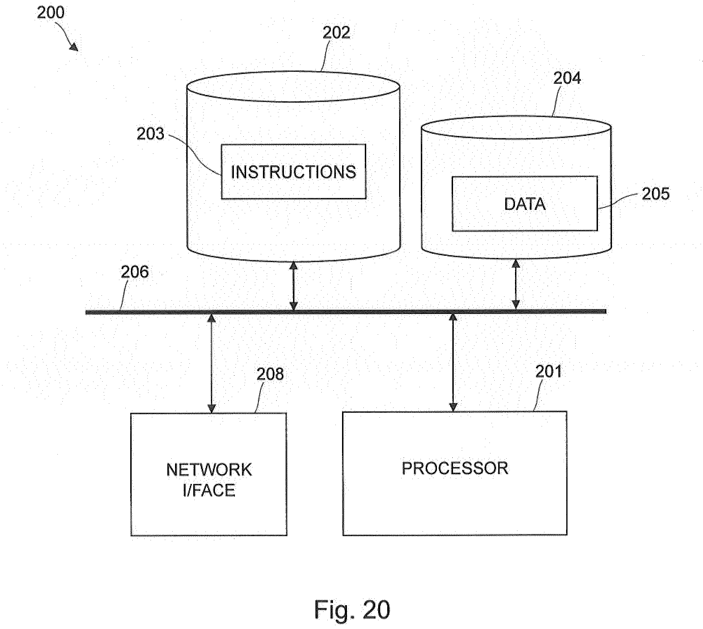

Figure 20 shows an exemplary processing apparatus 200 which may be implemented as any form of a computing and/or electronic device, and in which embodiments of the system and methods described above may be implemented. Processing apparatus 200 can be provided at one of the distribution network nodes, or at a subscriber apparatus 41. Processing apparatus may implement the method shown in any of Figures 5, 18 and 19. Processing apparatus 200 comprises one or more processors 201 which may be microprocessors, controllers or any other suitable type of processors for executing instructions to control the operation of the device. The processor 201 is connected to other components of the device via one or more buses 206. Processor-executable instructions 203 may be provided using any computer-readable media, such as memory 202. The processor-executable instructions 203 can comprise instructions for implementing the functionality of the described methods. The memory 202 is of any suitable type such as read-only memory (ROM), random access memory (RAM), a storage device of any type such as a magnetic or optical storage device. Additional memory 204 can be provided to store data 205 used by the processor 201. The processing apparatus 200 comprises one or more network interfaces 208 for interfacing with other network entities.

Modifications and other embodiments of the disclosed invention will come to mind to one skilled in the art having the benefit of the teachings presented in the foregoing descriptions and the associated drawings. Therefore, it is to be understood that the invention is not to be limited to the specific embodiments disclosed and that modifications and other embodiments are intended to be included within the scope of this disclosure. Although specific terms may be employed herein, they are used in a generic and descriptive sense only and not for purposes of limitation.

**Claims**

1.  A method of distributing a plurality of media content services (S1-S5) across a distribution network comprising:

    dividing each of the plurality of media content services (S1-S5) into segments; and
    transmitting the segments of each of the plurality of media content services (S1-S5) as a sequence of bursts (305), wherein there is a window period (303) between successive bursts during which media content is not transmitted,

    wherein each of the media content services (S1-S5) has a respective bit rate and the transmitting comprises transmitting each of the segments at a higher bit rate to create the window periods (303) between successive bursts (305), and wherein starts of bursts of the plurality of media content services (S1-S5) are staggered (301) in time with respect to one another.

2.  A method according to claim 1 wherein the starts of bursts of the plurality of media content services (S1-S5) are staggered in time with respect to one another such that, for any pair of the plurality of media content services (S1-S5), the window periods (303) of the media content services do not overlap.

3.  A method according to claim 1 or 2 wherein the bursts (305) of the plurality of media content services (S1-S5) are of equal burst duration (302) and the starts of bursts (305) of any pair of the plurality of media content services (S1-S5) are staggered in time by a time period which is less than, or equal to, the burst duration (302).

4.  A method according to any one of the preceding claims wherein each of the media content services (S1-S5) is transmitted as a multicast.

5.  A method according to any one of the preceding claims further comprising receiving or generating a plurality of media content service representations for at least one of the media content services (S1-S5), each of the media content representations having a different bit rate, and wherein the step of dividing each of the media content services into segments divides each of the media content service representations into segments, wherein the segments of the plurality of media content service representations of a respective media content service are aligned in time; and wherein the step of transmitting the segments comprises transmitting the segments of each of the plurality of media content service representations as a sequence of bursts (305), wherein the bursts (305) of the plurality of media content service representations of a respective media content service are aligned in time.

6.  A method according to claim 5 wherein each of the media content service representations is transmitted as a multicast.

7. A method according to any one of the preceding claims wherein each burst comprises a plurality of Internet Protocol packets.

8. A method according to any one of the preceding claims wherein the media content services are video services.

9. Apparatus for distributing a plurality of media content service across a distribution network (60) comprising:

an interface (63) for receiving the plurality of media content services;
segmenting apparatus (65) arranged to divide each of the plurality of media content services into segments;
an output unit (67) arranged to transmit the segments of each of the plurality of media content services (S1-S5) as a sequence of bursts (305), wherein there is a window period (303) between successive bursts (305) during which media content is not transmitted,

wherein each of the received or generated media content services has a respective bit rate and the transmitting comprises transmitting each of the segments at a higher bit rate to create the window periods (303) between successive bursts (305),
and wherein starts of bursts (305) of different media content services (S1-S5) are staggered in time with respect to one another.

10. Apparatus according to claim 9 wherein the starts of bursts (305) of the plurality of media content services (S1-S5) are staggered in time with respect to one another such that, for any pair of the plurality of media content services (S1-S5), the window periods (303) of the media content services (S1-S5) do not overlap.

11. Apparatus according to claim 9 or 10 wherein the bursts (305) of the plurality of media content services (S1-S5) are of equal burst duration and the starts of bursts (305) of any pair of the plurality of media content services (S1-S5) are staggered in time by a time period which is less than, or equal to, the burst duration (302).

12. Apparatus according to any one of claims 9 to 11 which is arranged to transmit each of the media content service representations as a multicast.

13. Apparatus according to any one of claims 9 to 12 wherein the segmenting apparatus (65) is arranged to divide at least one of the media content services (S1-S5) into a plurality of segmented media content service representations, each of the media content representations having a different bit rate, wherein the segments of the plurality of media content service representations of a respective media content service are aligned in time; and wherein the output unit (67) is arranged to transmit the segments of each of the plurality of media content service representations as a sequence of bursts (305), wherein the bursts (305) of the plurality of media content service representations of a respective media content service are aligned in time.

14. Apparatus according to claim 13 which is arranged to transmit each of the media content service representations as a multicast.


**Patentansprüche**

1. Verfahren zur Verteilung einer Mehrzahl von Medieninhaltsdiensten (S1-S5) über ein Verteilungsnetzwerk, umfassend:

Teilen eines jeden der Mehrzahl von Medieninhaltdiensten (S1-S5) in Segmente; und
Senden der Segmente eines jeden der Mehrzahl von Medieninhaltsdiensten (S1-S5) als eine Folge von Bursts (305), wobei es eine Fensterperiode (303) zwischen aufeinanderfolgenden Bursts gibt, während der kein Medieninhalt gesendet wird,
wobei jeder der Medieninhaltsdienste (S1-S5) eine jeweilige Bitrate aufweist, und das Senden ein Senden eines jeden der Segmente mit einer höheren Bitrate umfasst, um die Fensterperioden (303) zwischen aufeinanderfolgenden Bursts (305) zu erzeugen,
und wobei Starts von Bursts der Mehrzahl von Medieninhaltdienste (S1-S5) in Bezug auf einander zeitlich gestaffelt (301) werden.

2. Verfahren nach Anspruch 1, wobei die Starts von Bursts der Mehrzahl von Medieninhaltsdiensten (S1-S5) in Bezug aufeinander zeitlich derart gestaffelt werden, dass die Fensterperioden (303) der Medieninhaltsdienste sich für kein Paar der Mehrzahl von Medieninhaltsdiensten (S1-S5) überlappen.

3. Verfahren nach Anspruch 1 oder 2, wobei die Bursts (305) der Mehrzahl von Medieninhaltsdiensten (S1-S5) eine gleiche Burstdauer (302) aufweisen, und die Starts von Bursts (305) jedes Paares der Mehrzahl von Medieninhaltsdiensten (S1-S5) zeitlich um eine Zeitperiode gestaffelt werden, die kürzer als oder gleich wie die Burstdauer (302) ist.

4. Verfahren nach einem der vorhergehenden Ansprüche, wobei jeder der Medieninhaltsdienste (S1-S5) als Multicast gesendet wird.

5. Verfahren nach einem der vorhergehenden Ansprüche, ferner umfassend ein Empfangen oder Erzeugen einer Mehrzahl von Medieninhaltsdienstdarstellungen für mindestens einen der Medieninhaltsdienste (S1-S5), wobei jede der Medieninhaltsdarstellungen eine verschiedene Bitrate aufweist, und wobei der Schritt des Teilens eines jeden der Medieninhaltsdienste in Segmente jede der Medieninhaltsdienstdarstellungen in Segmente teilt, wobei die Segmente der Mehrzahl von Medieninhaltsdienstdarstellungen eines jeweiligen Medieninhaltsdienstes zeitlich abgestimmt werden; und wobei der Schritt des Sendens der Segmente ein Senden der Segmente einer jeden der Mehrzahl von Medieninhaltsdienstdarstellungen als eine Folge von Bursts (305) umfasst, wobei die Bursts (305) der Mehrzahl von Medieninhaltsdienstdarstellungen eines jeweiligen Medieninhaltsdienstes zeitlich abgestimmt werden.

6. Verfahren nach Anspruch 5, wobei jede der Medieninhaltsdienstdarstellungen als Multicast gesendet wird.

7. Verfahren nach einem der vorhergehenden Ansprüche, wobei jeder Burst eine Mehrzahl von Internetprotokollpaketen umfasst.

8. Verfahren nach einem der vorhergehenden Ansprüche, wobei die Medieninhaltsdienste Videodienste sind.

9. Vorrichtung zum Verteilen einer Mehrzahl von Medieninhaltsdiensten über ein Verteilungsnetzwerk (60), umfassend:

eine Schnittstelle (63) zum Empfangen der Mehrzahl von Medieninhaltsdiensten;
eine Segmentierungsvorrichtung (65), die zum Teilen eines jeden der Mehrzahl von Medieninhaltsdiensten in Segmente ausgelegt ist;
eine Ausgabeeinheit (67), die zum Senden der Segmente eines jeden der Mehrzahl von Medieninhaltsdiensten (S1-S5) als eine Folge von Bursts (305) ausgelegt ist, wobei es eine Fensterperiode (303) zwischen aufeinanderfolgenden Bursts (305) gibt, während der kein Medieninhalt gesendet wird,
wobei jeder der empfangenen oder erzeugten Medieninhaltsdienste eine jeweilige Bitrate aufweist, und das Senden ein Senden eines jeden der Segmente mit einer höheren Bitrate umfasst, um die Fensterperioden (303) zwischen aufeinanderfolgenden Bursts (305) zu erzeugen,
und wobei Starts von Bursts (305) verschiedener Medieninhaltdienste (S1-S5) in Bezug auf einander zeitlich gestaffelt werden.

10. Vorrichtung nach Anspruch 9, wobei die Starts von Bursts (305) der Mehrzahl von Medieninhaltsdiensten (S1-S5) in Bezug aufeinander zeitlich derart gestaffelt werden, dass die Fensterperioden (303) der Medieninhaltsdienste (S1-S5) sich für kein Paar der Mehrzahl von Medieninhaltsdiensten (S1-S5) überlappen.

11. Vorrichtung nach Anspruch 9 oder 10, wobei die Bursts (305) der Mehrzahl von Medieninhaltsdiensten (S1-S5) eine gleiche Burstdauer aufweisen, und die Starts von Bursts (305) jedes Paares der Mehrzahl von Medieninhaltsdiensten (S1-S5) zeitlich um eine Zeitperiode gestaffelt werden, die kürzer als oder gleich wie die Burstdauer (302) ist.

12. Vorrichtung nach einem der Ansprüche 9 bis 11, die zum Senden einer jeden der Medieninhaltsdienstdarstellungen als Multicast ausgelegt ist.

13. Vorrichtung nach einem der Ansprüche 9 bis 12, wobei die Segmentierungsvorrichtung (65) zum Teilen mindestens eines der Medieninhaltsdienste (S1-S5) in eine Mehrzahl von segmentierten Medieninhaltsdienstdarstellungen ausgelegt ist, wobei jede der Medieninhaltsdienstdarstellungen eine verschiedene Bitrate aufweist, wobei die Segmente der Mehrzahl von Medieninhaltsdienstdarstellungen eines jeweiligen Medieninhaltsdienstes zeitlich abgestimmt werden; und wobei die Ausgabeeinheit (67) zum Senden der Segmente einer jeden der Mehrzahl von Medieninhaltsdienstdarstellungen als eine Folge von Bursts (305) ausgelegt ist, wobei die Bursts (305) der Mehrzahl von Medieninhaltsdienstdarstellungen eines jeweiligen Medieninhaltsdienstes zeitlich abgestimmt werden.

**14.** Vorrichtung nach Anspruch 13, die zum Senden die zum Senden einer jeden der Medieninhaltsdienstdarstellungen als Multicast ausgelegt ist.

**Revendications**

**1.** Procédé de distribution d'une pluralité de services de contenu multimédia (S1-S5) à travers un réseau de distribution, comprenant :

la division de chacun de la pluralité de services de contenu multimédia (S1-S5) en segments ; et
la transmission des segments de chacun de la pluralité de services de contenu multimédia (S1-S5) en tant qu'une séquence de rafales (305), dans lequel il y a une période de fenêtre (303) entre des rafales successives au cours de laquelle un contenu multimédia n'est pas transmis,
dans lequel chacun des services de contenu multimédia (S1-S5) a un débit binaire respectif et la transmission comprend la transmission de chacun des segments à un débit binaire supérieur pour créer les périodes de fenêtre (303) entre des rafales successives (305),
et dans lequel des débuts de rafales de la pluralité de services de contenu multimédia (S1-S5) sont échelonnés (301) dans le temps l'un par rapport à l'autre.

**2.** Procédé selon la revendication 1, dans lequel les débuts de rafales de la pluralité de services de contenu multimédia (S1-S5) sont échelonnés dans le temps l'un par rapport à l'autre de sorte que, pour n'importe quelle paire de la pluralité de services de contenu multimédia (S1-S5), les périodes de fenêtre (303) des services de contenu multimédia ne se chevauchent pas.

**3.** Procédé selon la revendication 1 ou 2, dans lequel les rafales (305) de la pluralité de services de contenu multimédia (S1-S5) ont une durée de rafale égale (302) et les débuts de rafales (305) de n'importe quelle paire de la pluralité de services de contenu multimédia (S1-S5) sont échelonnés dans le temps par une période de temps qui est inférieure ou égale à la durée de rafale (302).

**4.** Procédé selon l'une quelconque des revendications précédentes, dans lequel chacun des services de contenu multimédia (S1-S5) est transmis en tant qu'une multidiffusion.

**5.** Procédé selon l'une quelconque des revendications précédentes, comprenant en outre la réception ou la génération d'une pluralité de représentations de service de contenu multimédia pour au moins l'un des services de contenu multimédia (S1-S5), chacune des représentations de service de contenu multimédia ayant un débit binaire différent, et dans lequel l'étape de la division de chacun des services de contenu multimédia en segments divise chacune des représentations de service de contenu multimédia en segments, dans lequel les segments de la pluralité de représentations de service de contenu multimédia d'un service de contenu multimédia respectif sont alignés dans le temps ; et dans lequel l'étape de la transmission des segments comprend la transmission des segments de chacune de la pluralité de représentations de service de contenu multimédia en tant qu'une séquence de rafales (305), dans lequel les rafales (305) de la pluralité de représentations de service de contenu multimédia d'un service de contenu multimédia respectif sont alignées dans le temps.

**6.** Procédé selon la revendication 5, dans lequel chacune des représentations de service de contenu multimédia est transmise en tant qu'une multidiffusion.

**7.** Procédé selon l'une quelconque des revendications précédentes, dans lequel chaque rafale comprend une pluralité de paquets de protocole Internet.

**8.** Procédé selon l'une quelconque des revendications précédentes, dans lequel les services de contenu multimédia sont des services vidéo.

**9.** Appareil de distribution d'une pluralité de services de contenu multimédia à travers un réseau de distribution (60), comprenant :

une interface (63) pour la réception de la pluralité de services de contenu multimédia ;

un appareil de segmentation (65) agencé pour la division de chacun de la pluralité de services de contenu multimédia en segments ;

une unité de sortie (67) agencée pour la transmission des segments de chacun de la pluralité de services de contenu multimédia (S1-S5) en tant qu'une séquence de rafales (305), dans lequel il y a une période de fenêtre (303) entre des rafales successives (305) au cours de laquelle un contenu multimédia n'est pas transmis, dans lequel chacun des services de contenu multimédia reçus ou générés a un débit binaire respectif et la transmission comprend la transmission de chacun des segments à un débit binaire supérieur pour créer les périodes de fenêtre (303) entre des rafales successives (305),

et dans lequel des débuts de rafales (305) de différents services de contenu multimédia (S1-S5) sont échelonnés dans le temps l'un par rapport à l'autre.

10. Appareil selon la revendication 9, dans lequel les débuts de rafales (305) de la pluralité de services de contenu multimédia (S1-S5) sont échelonnés dans le temps l'un par rapport à l'autre de sorte que, pour n'importe quelle paire de la pluralité de services de contenu multimédia (S1-S5), les périodes de fenêtre (303) des services de contenu multimédia (S1-S5) ne se chevauchent pas.

11. Appareil selon la revendication 9 ou 10, dans lequel les rafales (305) de la pluralité de services de contenu multimédia (S1-S5) ont une durée de rafale égale et les débuts de rafales (305) de n'importe quelle paire de la pluralité de services de contenu multimédia (S1-S5) sont échelonnés dans le temps par une période de temps qui est inférieure ou égale à la durée de rafale (302).

12. Appareil selon l'une quelconque des revendications 9 à 11, qui est agencé pour la transmission de chacune des représentations de service de contenu multimédia en tant qu'une multidiffusion.

13. Appareil selon l'une quelconque des revendications 9 à 12, dans lequel l'appareil de segmentation (65) est agencé pour la division d'au moins l'un des services de contenu multimédia (S1-S5) dans une pluralité de représentations de service de contenu multimédia segmentées, chacune des représentations de service de contenu multimédia ayant un débit binaire différent, dans lequel les segments de la pluralité de représentations de service de contenu multimédia d'un service de contenu multimédia respectif sont alignés dans le temps ; et dans lequel l'unité de sortie (67) est agencée pour la transmission des segments de chacune de la pluralité de représentations de service de contenu multimédia en tant qu'une séquence de rafales (305), dans lequel les rafales (305) de la pluralité de représentations de service de contenu multimédia d'un service de contenu multimédia respectif sont alignées dans le temps.

14. Appareil selon la revendication 13, qui est agencé pour la transmission de chacune des représentations de service de contenu multimédia en tant qu'une multidiffusion.

Fig. 1

Fig. 2

Fig. 3

EP 2 912 817 B1

Fig. 4

Generate a plurality of media content service representations for the media content service, each of the media content representations having a different bit rate. — 101

Divide each of the media content service representations into segments.
Segments of the plurality of media content service representations are aligned in time. — 102

Transmit the segments of each of the plurality of media content service representations as a sequence of bursts.
Bursts of the plurality of media content service representations are aligned in time and there is a window period between adjacent bursts during which media content is not transmitted.
Transmit each of the media content service representations as a multicast.
Transmit each of the segments at a higher bit rate to create the window periods between adjacent bursts. — 103

Fig. 5

Fig. 6

Media Multicast
Bursts

(S,G:N)

Trigger Multicast
(S,G:N-1)

IGMP
Fast Leave ▬▬▬
Join ▪▪▪▪▪

time

Fig. 7

EP 2 912 817 B1

Fig. 8

Fig. 9

Boundary point

Boundary point

83

| I | B | B | P |

| I | B |

TS pkt   TS pkt  ------  TS pkt

| HDR | AH | |

AH = Adaptation Header

RAI
set

Boundary point signalled

| IP pkt |

| HDR | payload |

Fig. 10

Fig. 11

Fig. 12

S5 S4 S3 S2 S1

304

303

305

time

Fig. 14

S5 S4 S3 S2 S1

305

303

time

Fig. 13

Fig. 15

Fig. 16

Fig. 17

Fig. 18

Generate a plurality of media content service
representations for the media content service, each
of the media content representations having a
different bit rate.

351

Divide each of the media content service
representations into segments.
Segments of the plurality of media content service
representations are aligned in time.

352

Transmit the segments of each of the plurality of
media content service representations as a
sequence of bursts.
Bursts of the plurality of media content service
representations are aligned in time.
Transmit each of the media content service
representations as a multicast.
Transmit each of the segments at a higher bit rate
to create window periods between adjacent bursts.
Starts of bursts of different media content services
are staggered in time with respect to one another.

353

Fig. 19

Fig. 20

EP 2 912 817 B1

**EP 2 912 817 B1**

## REFERENCES CITED IN THE DESCRIPTION

### Patent documents cited in the description

- US 20070121629 A1
- US 20120144445 A1